# EUROPEAN PATENT SPECIFICATION

(11) **EP 2 062 405 B1**
(45) Date of publication and mention of the grant of the patent: **23.12.2009**
(21) Application number: 07826171.6
(22) Date of filing: 28.08.2007
(51) Int. Cl.: H04L 12/58

(54) **OPTIMIZED MESSAGE COUNTING**
OPTIMIERTE NACHRICHTENZÄHLUNG
OPTIMISATION DU COMPTAGE DE MESSAGES

(30) Priority: 01.09.2006 US 841497 P; 08.09.2006 US 842972 P; 26.09.2006 US 526655
(43) Date of publication of application: 27.05.2009
(73) Proprietor: TELEFONAKTIEBOLAGET LM ERICSSON (publ), 164 83 Stockholm (SE)
(72) Inventor: DENIS, Martin, Vaudreuil, Québec J7V 8P5 (CA)
(74) Representative: Kribber, Klaus-Dieter
(86) International application number: PCT/IB2007/053452
(87) International publication number: WO 2008/026159

(56) References cited:
- EP-A- 1 613 009
- WO-A-01/28171
- WO-A-2004/025912
- WO-A-2005/046149
- US-A1- 2005 171 996
- US-B1- 6 643 360
- "Technical Specification Group Terminals; Multimedia Messaging Service (MMS); Functional description; Stage 2 (Release 6)" 3GPP TS 23.140 V6.13.0, [Online] 13 June 2006 (2006-06-13), XP002468770 Retrieved from the Internet: URL:http://www.3gpp.org/ftp/Specs/archive/ 23_series/23.140/23140-6d0.zip> [retrieved on 2008-02-13]

## Description

### Technical Field

The present invention relates to optimized message counting in messaging systems.

### Background

In general, messaging includes the creation, storage, exchange, and management of messages containing one or more of text, images, voice, telex, fax, e-mail, paging, and over a communications network. Messaging systems handle significant number of messages, and the proper management of each such message is of critical importance. It is thus essential for a messaging system to be able to "know", at every moment and circumstance, including during a re-start operation triggered by a system failure, the number of messages it handles, the state of each such message, along with other information of concern.

Delivering messages to a destination may involve many actions depending upon the nature of the particular messaging system. For example, in Multimedia Messaging Systems (MMS), such actions include receiving a new MMS message, storing the message on a data repository, notifying the destination party of the message availability, (which may involve successive communication attempts), waiting for the message to be retrieved by the message destination party, etc. In order to avoid an unlimited accumulation of messages over the time, all messages that are received by an MMS communication system are also assigned an expiry date that drives messages' deletion if messages are not delivered to their respective intended destination parties before their expiry.

One of the challenges faced in many messaging systems, including in MMS, is to be able to know, at each moment, how many messages are in those different states (which could be millions on the file system).

One simple solution is to program a tool that goes over the entire messaging system's file system, to open and read all messages to know in which state they are. However, this process is extremely slow, as the number of file system readings is proportional to the number of existing messages. Another known solutions , as described in US 6,643,360 B1 is to use message counters, which are incremented and written in a file as messages arrive or change state. However, this operation is also resources-demanding, as it involves a significant number of input/output operations for every message state change. For example, at each state change, the system has to execute i) an open file operation, an edit file operation to increase the counter(s) and a save file operation in order to save the change. This slows down the system performance and it could also become inaccurate after a period of time (e.g. a few mounts) due to input/output errors of the disk unit that accumulate in the saved counters. Yet another known solution involves the writing of individual message counters in the system's memory (e.g. RAM), combined with the periodic dumping of this information to the file system. However this method also involves possible inaccuracies, which are accumulated in the counters as counter failures occur due to various reasons, such as for example power failures, software bugs, restart operations and the likes.

The main problems with existing solutions are their inaccuracy in keeping track of messages over an extended period of time and the burden they put on system performance.

Accordingly, it should be readily appreciated that in order to overcome the deficiencies and shortcomings of the existing solutions, it would be advantageous to have a method and system for effectively providing accurate count information about the messages managed by a messaging system without impairing the performances of the system. The present invention provides such a method and system.

### Summary of the Invention

In one aspect, the present invention is a memory for storing message count information, comprising a data structure stored in said memory, the data structure including a plurality of entries, each entry corresponding to a message state and comprising:
a message state information defining one message state;
a variation information, indicative of a number of messages that have joined and left the message state during a certain period of time; and
an expiry time, representative of a time when the messages that have joined and left the message state are to be discarded.

In another aspect, the invention is a method for managing messages in a messaging node, the method comprising the steps of:
a. receiving a message;
b. assigning an expiry time to the message, the expiry time being indicative of a time when the message is to be discarded from the system;
c. assigning a first state to the message; and
d. incrementing a message variation entry in a data structure to reflect the assignment of the first state to the message, the variation entry being associated with i) the first state assigned to the message and ii) with the expiry time assigned to the message.

In yet another aspect, the invention is a method for counting messages, the method comprising the steps of:
a. in a messaging node, reading at least certain entries among a plurality of entries stored in a file, said certain entries having an expiry time that has not yet expired; and
b. adding variation information of each entry that is read to obtain a sum representative of a number of messages of a system;
wherein each entry of the file includes: i) one message state, ii) a variation information indicative of a number of messages that have joined and left the message state during a certain period of time, ii) an expiry time representative of a time when the messages that have joined and left the message state are to be discarded.

In yet another aspect, the invention is a messaging node, comprising:
an input/output interface receiving a message;
a data structure storing a plurality of entries, each entry comprising a message state information defining one message state, a message variation indicative of a number of messages that have joined and left the message state during a certain period of time, and an expiry time representative of a time when the messages that have joined and left the message state are to be discarded;
a message processor assigning an expiry time to the received message, the expiry time being indicative of a time when the message is to be discarded from the system, the message processor further assigning a first state to the received message, and acting to increment a message variation in the data structure, the message variation being associated with i) the first state assigned to the message and ii) with the expiry time assigned to the message.

### Brief Description of the Drawings

For a more detailed understanding of the invention, for further objects and advantages thereof, reference can now be made to the following description, taken in conjunction with the accompanying drawings, in which:

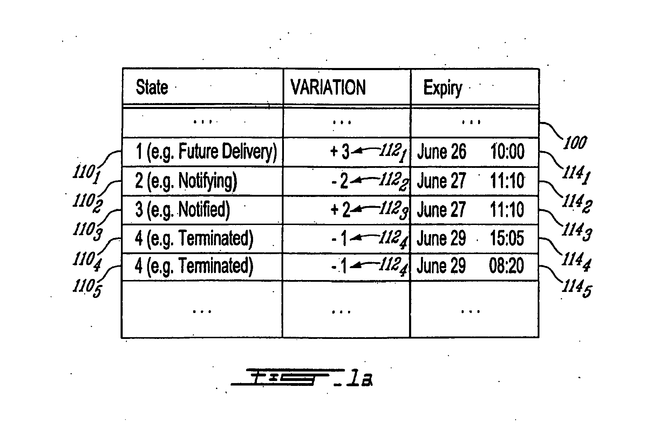

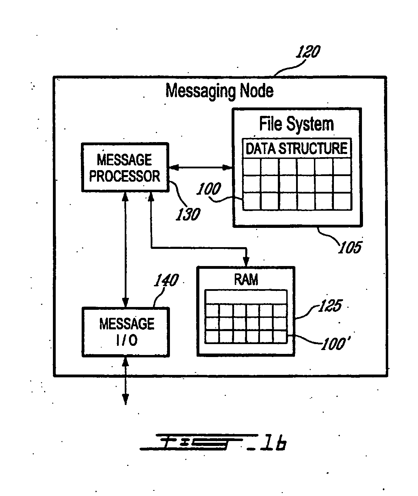

Figure 1.a is an exemplary schematic representation of a data structure implementing the preferred embodiment of the present invention;
Figure 1.b is an exemplary high-level block diagram representing a messaging node implementing the preferred embodiment of the present invention;
Fgure 2 is an exemplary high-level flowchart diagram showing a method for creating and operating the data structure according to the preferred embodiment of the present invention;
Figure 3 is another exemplary flowchart diagram showing a method for handling message state changes according to the preferred embodiment of the present invention; and
Figure 4 is an exemplary flowchart diagram showing a method for restarting a messaging system according to the preferred embodiment of the present invention;

### Detailed Description

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

The present invention provides a method, system, and data structure for providing efficient and reliable message counting. The invention allows avoiding updating counters on disk for every message state change, which may sometimes be in the range of hundreds per second, and further allows for auto correction of counters when abnormal situations occur. According to the invention, a data structure, such as for example a file, is used for storing counters representative of the variation of the number of messages in each state. The data structure keeps count of all the messages' states variations and their associate expiry time that occurred during a pre-defined period of time, e.g. +1 message of state A expiring at time X, -3 messages of state B expiring at time Z, etc. Preferably, the data structure is held in the systems memory. Then, at the end of the pre-defined period of time, that may be set for example to 15 seconds, the data structure is appended to a file saved on the file system, thus providing for the construction of a file that contains successive variations of the number of messages in each state, for given expiry times. Then, each time an accurate current count of all existing messages is needed, the invention allows for the reading of the variation counters of the data structure stored in the file, for the unexpired variations (the ones for which the expiry time has not yet passed) to calculate the current accurate message counters for each state of the entire system.

Reference is now made to Figure 1.a, which is an exemplary schematically representation of the data structure implementing the preferred embodiment of the present invention. Shown in Figure 1.a is the data structure 100 that stores information related to the state of the messages 110ᵢ, the variation 112ᵢ of the number of messages in a given state for a specific period of time, and message expiry information 114ᵢ associated to each one of the messages states 110ᵢ. The data structure 100 may be preferably created in the system's RAM memory, and then periodically saved in a file of the file system, where the mentioned information is stored in order to allow having a specific view of the state of the system of each given time. According to the invention, every specified period of time, such as for example every 15 seconds, the states variation associated to each available time expiry is transferred from the system's RAM and appended to the end of the file. For example, during a given period of time, the messaging system receives 3 new messages which are assigned to state 1, all of them having the same expiry time of June 2610:00. Thus, the variation of state 1 110₁ is +3, as shown at 112₁. Also, for example, during the same period of time, 2 messages are going from state 2 to state 3, while having the time expiry set to June 27 11:10. Therefore, in line 2 of the data structure the variation of state 2110₂ is -2 (to show that 2 messages left state 2) while the variation 110₃ on the third line of the data structure is +2 (to show that 2 messages were assigned state 3). During the same time period, 2 other messages of the state 4, having different time expiries June 2915:05 and June 29 08:20 respectively, are being deleted, because state 4 is the last possible state of the system, and as messages change their state from state 4, they are set to be deleted. Hence, the data structure shows variations of -1, at 112₄ (to show that 1 message of state 4 and with time expiry June 29,15:05 has left state 4) and 112₅ (to show that 1 message of state 4 and with time expiry June 29, 08:20 has also left state 4).

In Figure 1.a, as more and more information is appended at the end of the data structure stored in the RAM, a suite of variations are created and stored for each expiry date assigned by the system to incoming messages. All the RAM's data structure is then appended to the file stored in the file system, which has the same structure, thus providing for the construction of a file that has a sequence of variations for each possible state, and for each expiry time assigned by the system. Such information will help in recovering messages count information at every moment of the operation, including after a re-start operation ft he system, in a manner that is yet to be described.

Reference is now made to Figure 1 .b, which is an exemplary high-level block diagram representing a messaging node implementing the preferred embodiment of the present invention. Shown in Figure 1.b, is a messaging node 120, which may be for example an MMS messaging node, an SMS (Short Messaging Service) messaging node, an email server, an IMS (IP Multimedia Subsystem) server, an alarm server or any other type of node or server that handles messages, such as for example MMS, SMS, IMS messages, alarm messages, notification messages, or any other type of message. The messaging node 120 comprises a file system 105 storing the previously described data structure file 100, and a RAM 125, that temporarily stores the data structure 100'. The structure of the file 100 and of the data structure 100' may preferably the same, such as for example in the form of a table as exemplarily shown in Figure 1.a, except for the fact that the file 100 comprises a collection of data successively transferred from the data structure 100' into the file 100. The file system 105 and the RAM 125 are connected to a message processor 130 which actions are yet to be described in connection with the preferred embodiment of the present invention. The message processor is in turn connected to an input/output message interface 140 through which the messaging node 120 receives 150 and sends 155 messages to external nodes (not shown).

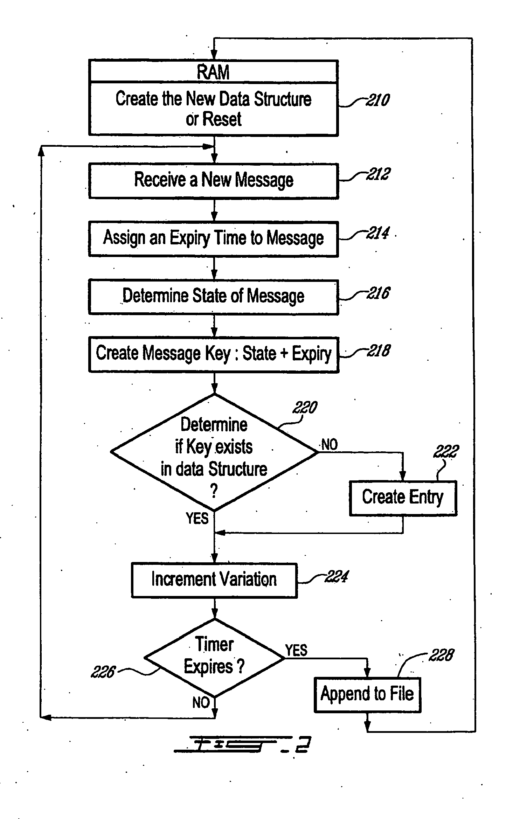

The functioning of the messaging node 120 will now be described with reference being first made to Figure 2, which is an exemplary flowchart diagram showing a method 200 for creating and operating the data structure according to the preferred embodiment of the present invention. First, in action 210, the data structure 100 is created in the RAM 125. This action may involve the input of a system administrator, or being performed automatically as per specifications previously made and under the control of the message processor 130. In action 212, the message processor 130 of the messaging node 120 receives a new message via a message I/O interface 140, and in action 214 the message processor 130 assigns an expiry time to the message. For example, in some implementations the expiry time is assigned to pre-selected values that depend upon the time the message is received at a system, e.g. all messages received during time interval X are assigned the expiry time Y. In action 216, the message processor 130 determines the state of the message based on its internal setting. For example, in many MMS systems, newly received messages are assigned state 1 ("Future Delivery") if the message is scheduled for future delivery (as opposed to immediate delivery) or state 2 ("Notifying") when the message is to be delivered immediately, and when the system is in the process of notifying the recipient about the availability of the message in the network. In action 218, the message processor 130 creates a message key composed of the combination of the message state and its assigned expiry date. Then, in action 220, the message processor 130 determines if the newly created key already exists in the data structure 100, and if not, creates a new entry in the form of a new line comprising the state information 110 along with the expiry time 114, action 222. Otherwise, if in action 220 it is rather determined that an entry that corresponds to the key already exists in the data structure, the method continues by incrementing the variation 112 that corresponds to the message key created in action 218 and identified within the data structure in action 220, in order to show that one more message has been assigned to the given message state. Likewise, if the entry is created in action 222, the method also continues with action 224 where the variation of the data structure entry is incremented as mentioned. In action 226, the method detects whether or not the timer that controls the period of time after which the content of the data structure 100' of the RAM 125 is to be saved onto the file system 105 has expired. If not, the method returns before step 212, where the messaging node waits for the receipt of other messages, which are to be treated in a similar way as described. Otherwise, if in action 226 it is rather determined that the timer that controls the period of time after which the content of the data structure 100' of the RAM 125 is to be appended to the file 100 of the file system 105 has expired, the content of data structure 100' of the RAM is appended to the file 100 of the file system 105, action 228, and the method returns before step 210, where a new RAM data structure is created (or the later RAM data structure is reset).

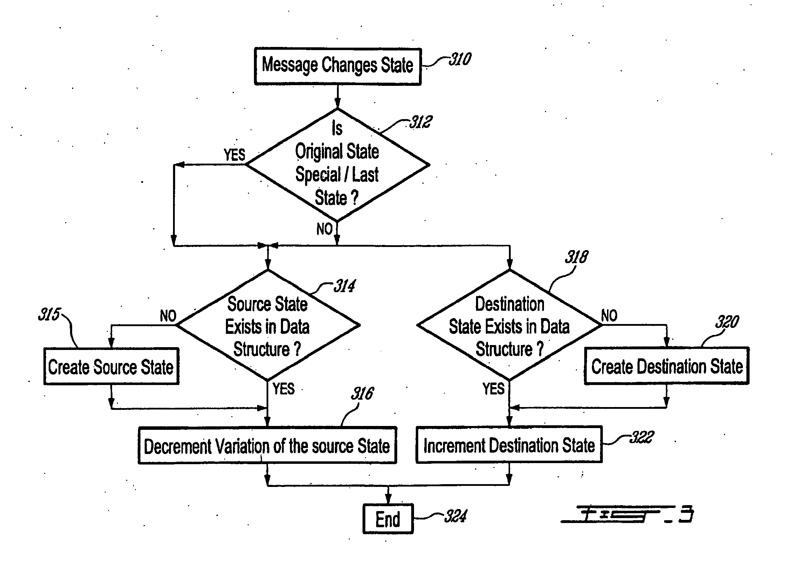

Reference is now made to Figure 3, which is another exemplary flowchart diagram showing a method for handling message state changes according to the preferred embodiment of the present invention. In Figure 3, the method starts with action 310, where the state of one of the existing messages of the messaging system is changed, i.e. passes from one value to another. For example, referring again to an exemplary MMS system, the message having the state 2 of "Notifying" (which means the system is in the process of notifying the intended recipient of the availability of the message in the system) is changed to the state 3 of "Notified" (meaning that a system has successfully notified the intended recipient of the availability of the message in the system). When this occurs, the method determines in action 312 whether or not the original state of the message (i.e. the source state of the message) is also a special or last possible state of the message. For example, as mentioned, state 4 may be set to be the last possible state of the messages, which means that when a message changes its state from state 4, it is not assigned any other new state, but rather simply deleted. If the determination of action 312 is positive, i.e. if it is determined that the message state is a special state, the method continues with action 314, while if the determination is negative, i.e. if it is determined that the message state is not a special state, the method continues with both actions 314 or 318. In action 314, it is determined if an entry associated with the source state of the message and with its expiry time already exists in the data structure 100', which may be achieved by parsing the data structure 100' for determining the existence of any entry related to the source state and the message expiry time. In such an entry is not found in action 314, the method continues with action 315 where an entry is created in the data structure 100 containing the source state 110 of the message and its expiry time 114. Afterwards, the method continues with action 316, just as it does if in action 314 it is determined that an entry does exist in the data structure 100' comprising the source state of the message and its expiry time. In action 316 the message processor 130 decrements the variation stored in the data structure entry associated with the message source state and expiry time, in order to reflect that the message has been retrieved from the state.

In action 318, it is determined whether or not an entry associated with the destination state of the message (i.e. the newly assigned state of the message, as done on action 310) and with its expiry time already exists in the data structure 100'. which may be achieved by parsing the data structure 100 for determining the existence of any entry related to the destination state and the message expiry time. If such an entry is not found in action 318, the method continues with action 320 where an entry is created in a data structure 100 containing the destination state 110 of the message and its expiry time 114. Afterwards, the method continues with action 322, just as it does if in action 318 it is determined that an entry exists in the data structure 100 comprising the destination state of the message and its expiry time. In action 322, the message processor 130 increments the variation of the data structure entry associated with the message destination state and expiry time, in order to reflect that one new message has been assigned to the new state.

In this manner, by performing the actions described in relation to Figure 2 and Figure 3, the invention keeps track of all the variation of the number of messages of each possible message state associated with a given expiry time.

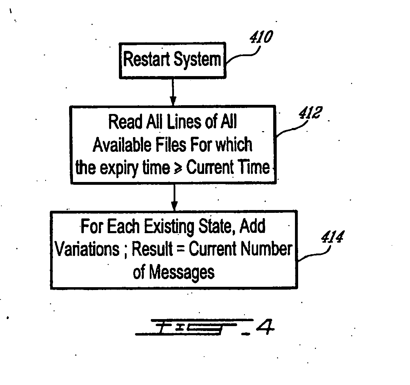

Reference is now made to Figure 4, which is an exemplary flowchart diagram showing a method for restarting a messaging system according to the preferred embodiment of the present invention. In Figure 4, in action 410, the messaging node 120 is restarted, as a consequence of, for example, a malfunction or failure, although the subsequent steps may be performed independently, without requiring action 410. Once the messaging is running, or even during normal operation without action 410, in action 412 the message processor 130 accesses the file 100 of the file system 105 and reads all the lines of the file for which the expiry time is greater than the current time, i.e. all lines which associated expiry time has not yet passed. The reason of the sole reading of the lines with entries which expiry time has not yet passed is to consider only messages that are still present in the system, i.e. not deleted or discarded by the system, as it happens upon their expiry. In action 414, the message processor 130 adds (performs a sum operation) the variations found on each such line, for each existing state. The result of such addition is the calculation of the current total number of messages stored in the system, for each message state. For example, in action 414, the processor 130 may calculate that N messages of state 1 are present in the system, by summing all variations found in the file 100 which state is equal to 1. Because the variations 112ᵢ represent the number of messages that entered (positive variations) and exited (negative variations) state 1, their sum thus represent the current number of messages present in state 1. As mentioned, the sum operation is performed only for the unexpired file entries, i.e. for those entries which expiry time has not yet passed (i.e. is greater than the current time).

Action 412 may comprise reading only those lines of the file which state is not the special state 4. The reason of such procedure is to only read (or to consider subsequent to the reading) those states for which messages are actually pending delivery (as messages are deleted or discarded when moved to state 4). In such a variant of the preferred embodiment of the invention, in action 414 the sum operation is thus only performed for states different of state 4 (states 1, 2, and 3), and the result obtained in action 414 is the total number of pending messages of the system, i.e. the sum of all messages of states 1, 2, and 3, that represents messages that are either scheduled for future delivery (state 1) or in the process of being delivered (states 2 and 3).

Therefore, with the present invention it becomes possible to accurately count various messages of messaging systems.

Furthermore, the present invention also provides a method for storing, reading and counting the messages, as described hereinbefore, that has the advantage of being auto-corrective, i.e. that does not cumulate possible errors as was the case in the prior art implementations, but rather eliminates the possible errors that exist in the counters after a period of time. The entries are stored in the file 100 of the file system 105 along with their expiry time, which is typically set to the time of the first writing action (e.g. the time the message was received at the system) plus a few days (e.g. 3 days). When the counting procedure of the file 100 is then performed as described in relation to Figure 4, only entries which expiry date has not yet passed are being read and used for the sum operation of action 414, which means that only entries being less than e.g. 3 days old are considered. All entries older than this are ignored, and therefore the invention allows for the elimination of all errors present in entries older than the e.g. 3 days, from the final result provided by action 414.

Referring to a method for managing messages in a messaging node, the method comprising the steps of:
a. receiving a message;
b. assigning an expiry time to the message, the expiry time being indicative of a time when the message is to be discarded from the system;
c. assigning a first state to the message; and
d. incrementing a message variation entry in a data structure to reflect the assignment of the first state to the message, the variation entry being associated with i) the first state assigned to the message and ii) with the expiry time assigned to the message. In one embodiment, this method further comprises prior to step a. the step of: e. creating the data structure.
   In a further embodiment, this method further comprises the steps of:
e. subsequent to step c. creating a key composed of the expiry time assigned to the message and the first state assigned to the message;
f. determining whether or not an entry exists in the data structure that corresponds to the key;
g. upon determining that an entry does not exist in the data structure that corresponds to the key, creating an entry in the data structure that comprises the first state assigned to the message and the expiry time assigned to the message; and
h. performing step d. subsequent to step g.

Referring to a method for counting messages, the method comprising the steps of:
a. in a messaging node, reading at least certain entries among a plurality of entries stored in a file, said certain entries having an expiry time that has not yet expired; and
b. adding variation information of each entry that is read to obtain a sum representative of a number of messages of a system;
   wherein each entry of the file includes: i) one message state, ii) a variation information indicative of a number of messages that have joined and left the message state during a certain period of time, ii) an expiry time representative of a time when the messages that have joined and left the message state are to be discarded. In an embodiment of the invention, steps a. and b. are performed responsive to the step of:
c. restarting the messaging node. -

Based upon the foregoing, it should now be apparent to those of ordinary skills in the art that the present invention provides an advantageous solution for keeping track of messages of a messaging system. Although the system and method of the present invention have been described in particular preference to certain radio telecommunications messaging standards, e.g. MMS, it should be realized upon reference hereto that the innovative teachings contained herein are not necessarily limited thereto and may be implemented advantageously with any applicable radio telecommunications standard and with any type of messages. It is believed that the operation and construction of the present invention will be apparent from the foregoing description. While the method and system shown and described have been characterized as being preferred, it will be readily apparent that various changes and modifications could be made therein without departing from the scope of the invention as defined by the claims set forth hereinbelow.

## Claims

1. A memory for storing message count information, comprising a data structure stored in said memory, the data structure including a plurality of entries, each entry corresponding to a message state and comprising:
a message state information (110) defining one message state;
a variation information (112) indicative of a number of messages that have joined and left the message state during a certain period of time; and
an expiry time (114) representative of a time when the messages that have joined and left the message state are to be discarded.

2. The memory as claimed in claim 1, wherein the memory is a Random Access Memory (RAM) and the data structure is a file, or wherein the memory is a file system and the data structure is a file, or wherein the memory is contained in a messaging node.

3. A method for managing messages in a messaging node, the method comprising the steps of:
a. receiving (212) a message;
b. assigning (214) an expiry time to the message, the expiry time being indicative of a time when the message is to be discarded from the system;
c. assigning (216) a first state to the message; and
d. incrementing (224) a message variation entry in a data structure to reflect the assignment of the first state to the message, the variation entry being associated with i) the first state assigned to the message and ii) with the expiry time assigned to the message.

4. The method claimed in claim 3, further comprising prior to step a., the step of:
e. resetting the data structure.

5. The method claimed in claim 3, further comprising the steps of:
e. subsequent to step c., creating a key comprising the expiry time assigned to the message and the first state assigned to the message;
f. determining whether or not an entry exists in the data structure that corresponds to the key; and
g. performing step d. upon determining that an entry exists in the data structure that corresponds to the key.

6. The method claimed in claim 3, further comprising the steps of:
e. determining whether or not a timer expired, the timer being indicative of a time when a content of the data structure is to be appended to a file; and
f. upon determining that the timer expired, appending the content of the data structure to the file.

7. The method claimed in claim 3, further comprising the steps of:
e. assigning a second state to the message; and
f. decrementing the message variation entry in the data structure that is associated with the first state and to the expiry time.

8. The method claimed in claim 7, further comprising the steps of:
g. incrementing a message variation entry in the data structure that is associated with the second state and to the expiry time.

9. A method for counting messages, the method comprising the steps of:
a. in a messaging node, reading (412) at least certain entries among a plurality of entries stored in a file, said certain entries having an expiry time that has not yet expired; and
b. adding (414) variation information of each entry that is read to obtain a sum representative of a number of messages of a system;
wherein each entry of the file includes: i) one message state, ii) a variation information indicative of a number of messages that have joined and left the message state during a certain period of time. iii) an expiry time representative of a time when the messages that have joined and left the message state are to be discarded.

10. A messaging node, comprising:
an input/output interface (140) receiving a message;
a data structure (100) storing a plurality of entries, each entry comprising a message state information defining one message state, a message variation indicative of a number of messages that have joined and left the message state during a certain period of time, and an expiry time representative of a time when the messages that have joined and left the message state are to be discarded;
a message processor (130) assigning an expiry time to the received message, the expiry time being indicative of a time when the message is to be discarded , the message processor further assigning a first state to the received message, and acting to increment a message variation in the data structure, the message variation being associated with i) the first state assigned to the message and ii) with the expiry time assigned to the message.

11. The messaging node claimed in claim 10, wherein the message processor creates a key comprising the expiry time assigned to the message and the first state assigned to the message, determines whether or not an entry exists in the data structure that corresponds to the key, and upon determining that an entry exists in the data structure that corresponds to the key, acts to increment the message variation.

12. The messaging node claimed in claim 10, wherein the message processor creates a key comprising the expiry time assigned to the message and the first state assigned to the message, determines whether or not an entry exists in the data structure that corresponds to the key, and upon determining that an entry does not exist in the data structure that corresponds to the key, creates an entry in the data structure that comprises the first state assigned to the message and the expiry time assigned to the message and acts to increment the message variation.

13. The messaging node claimed in claim 10, further comprising:
a Random Access Memory (RAM) storing the data structure;
a file system storing a file;
wherein the processor determines whether or not a timer expired, the timer being indicative of a time when a content of the data structure is to be appended to the file, the processor, upon determining that the timer expired, appending the content of the data structure to the file.

14. The messaging node claimed in claim 10, wherein the processor acts to assign a second state to the message, and to decrement the message variation entry in the data structure that is associated with the first state and to the expiry time.

15. The messaging node claimed in claim 13, wherein the processor increments a message variation entry in the data structure that is associated with the second state and to the expiry time.

16. The messaging node claimed in claim 12, wherein the processor reads at least certain entries among a plurality of entries stored in the file, said certain entries having an expiry time that has not yet expired, the processor adding variation information of each entry that is read to obtain a sum representative of a number of messages of a system.

17. The messaging node claimed in claim 15, wherein the processor reads at least certain entries among a plurality of entries stored in the file when the messaging node is restarted.

## Patentansprüche

1. Speicher zum Speichern von Nachrichtenzählungsinformationen, umfassend eine Datenstruktur, die in dem Speicher gespeichert ist,
wobei die Datenstruktur eine Mehrzahl von Einträgen umfasst und jeder Eintrag einem Nachrichtenzustand entspricht, und umfassend,
Nachrichtenzustandsinformation (110), die einen Nachrichtenzustand definiert;
Variationsinformation (112), die für eine Anzahl von Nachrichten bezeichnend ist, die während einer bestimmten Zeitdauer in den Nachrichtenzustand eingetreten sind und diesen verlassen haben; und
eine Ablaufzeit (114), die für eine Zeit repräsentativ ist, zu der die Nachrichten zu verwerfen sind, die in den Nachrichtenzustand eingetreten sind und diesen verlassen haben.

2. Speicher nach Anspruch 1, wobei es sich bei dem Speicher um einen Direktzugriffsspeicher (RAM) und bei der Datenstruktur um eine Datei handelt, oder wobei es sich bei dem Speicher um ein Dateisystem und bei der Datenstruktur um eine Datei handelt, oder wobei der Speicher in einem Nachrichtenübermittlungsknoten enthalten ist.

3. Verfahren zum Verwalten von Nachrichten in einem Nachrichtenübermittlungsknoten, wobei das Verfahren die folgenden Schritte umfasst:
a. Empfangen (212) einer Nachricht;
b. Zuordnen (214) einer Ablaufzeit zu der Nachricht,
wobei die Ablaufzeit für eine Zeit bezeichnend ist, zu der die Nachricht aus dem System zu verwerfen ist;
c. Zuordnen (216) eines ersten Zustands zu der Nachricht; und
d. Inkrementieren (224) eines Nachrichtenvariationseintrags in einer Datenstruktur, um die Zuordnung des ersten zustands zur Nachricht widerzuspiegeln, wobei der Variationseintrag mit i) dem ersten Zustand, der der Nachricht zugeordnet ist, und ii) mit der Ablaufzeit, die der Nachricht zugeordnet ist, assoziiert wird.

4. Verfahren nach Anspruch 3, ferner umfassend den folgenden Schritt vor Schritt a,:
e. Rücksetzen der Datenstruktur.

5. Verfahren nach Anspruch 3, ferner umfassend die folgenden Schritte:
e. Erzeugen nach Schritt c. eines Schlüssels, der die Ablaufzeit, die der Nachricht zugeordnet ist, und den ersten Zustand, der der Nachricht zugeordnet ist, umfasst;
f. Bestimmen, ob ein Eintrag, der dem Schlüssel entspricht, in der Datenstruktur vorhanden ist oder nicht; und
g. Ausführen von Schritt d. auf das Bestimmen hin, dass ein Eintrag in der Datenstruktur vorhanden ist, der dem Schlüssel entspricht.

6. Verfahren nach Anspruch 3, ferner umfassend die folgenden Schritte:
e. Bestimmen, ob ein Zeitgeber abgelaufen ist oder nicht, wobei der Zeitgeber für eine Zeit bezeichnend ist, zu der ein Inhalt der Datenstruktur an eine Datei anzuhängen ist; und
f. Anhängen auf das Bestimmen hin, dass der Zeitgeber abgelaufen ist, des Inhalts der Datenstruktur an die Datei.

7. Verfahren nach Anspruch 3, ferner umfassend die folgenden Schritte:
e. Zuordnen eines zweiten Zustands zu der Nachricht; und
f. Dekrementieren des Nachrichtenvariationseintrags in der Datenstruktur, der mit dem ersten Zustand und der Ablaufzeit assoziiert ist.

8. Verfahren nach Anspruch 7, ferner umfassend die folgenden Schritte:
g. Inkrementieren eines Nachrichtenvariationseintrags in der Datenstruktur, der mit dem zweiten Zustand und der Ablaufzeit assoziiert ist.

9. Verfahren zum Zählen von Nachrichten, wobei das Verfahren die folgenden schritte umfasst:
a. Lesen (412) in einem Nachrichtenübermittlungsknoten wenigstens bestimmter Einträge unter einer Mehrzahl von Einträgen, die in einer Datei gespeichert sind,
wobei die bestimmten Einträge eine Ablaufzeit haben, die noch nicht abgelaufen ist; und
b. Hinzufügen (414) von Variationsinformation zu jedem Eintrag, der gelesen wird, um eine Summe zu erhalten, die für eine Anzahl von Nachrichten eines Systems repräsentativ ist;
wobei jeder Eintrag der Datei umfasst: i) einen Nachrichtenzustand, ii) Variationsinformation, die für eine Anzahl von Nachrichten bezeichnend ist, die während einer bestimmten Zeitdauer in den Nachrichtenzustand eingetreten sind und diesen verlassen haben, und iii) eine Ablaufzeit, die für eine Zeit repräsentativ ist, zu der die Nachrichten zu verwerfen sind, die in den Nachrichtenzustand eingetreten sind und diesen verlassen haben.

10. Nachrichtenübermittlungsknoten, umfassend:
eine Eingangs-/Ausgangsschnittstelle (140), die eine Nachricht empfängt;
eine Datenstruktur (100), die eine Mehrzahl von Einträgen speichert, wobei jeder Eintrag Nachrichtenzustandsinformation, die einen Nachrichtenzustand definiert, eine Nachrichtenvariation, die für eine Anzahl von Nachrichten bezeichnend ist, die während einer bestimmten Zeitdauer in den Nachrichtenzustand eingetreten sind und diesen verlassen haben, und eine Ablaufzeit umfasst, die für eine Zeit repräsentativ ist, zu der die Nachrichten zu verwerfen sind, die in den Nachrichtenzustand eingetreten sind und diesen verlassen haben;
einen Nachrichtenprozessor (130), der der empfangenen Nachricht eine Ablaufzeit zuordnet, wobei die Ablaufzeit für eine Zeit bezeichnend ist, zu der die Nachricht zu verwerfen ist, der Nachrichtenprozessor der empfangenen Nachricht ferner einen ersten Zustand zuordnet und so agiert, dass er eine Nachrichtenvariation in der Datenstruktur inkrementiert, wobei die Nackzrichtenvariation mit i) dem ersten Zustand, der der Nachricht zugeordnet ist, und ii) mit der Anlaufzeit, die der Nachricht zugeordnet ist, assoziiert ist.

11. Nachrichtenübermittlungsknoten nach Anspruch 10, wobei der Nachrichtenprozessor einen Schlüssel erzeugt, der die Ablaufzeit, die der Nachricht zugeordnet ist, und den ersten Zustand umfasst, der der Nachricht zugeordnet ist, bestimmt, ob ein Eintrag, der dem Schlüssel entspricht, in der Datenstruktur vorhanden ist oder nicht, und bei Bestimmen, dass ein Eintrag in der Datenstruktur vorhanden ist, der dem Schlüssel entspricht, so agiert, dass er die Nachrichtenvariation inkrementiert.

12. Nachrichtenübermittlungsknoten nach Anspruch 10, wobei der Nachrichtenprozessor einen Schlüssel erzeugt, der die Ablaufzeit, die der Nachricht zugeordnet ist, und den ersten zustand umfasst, der der Nachricht zugeordnet ist, bestimmt, ob ein Eintrag, der dem Schlüssel entspricht, in der Datenstruktur vorhanden ist oder nicht, und auf das Bestimmen hin, dass kein Eintrag in der Datenstruktur vorhanden ist, der dem Schlüssel entspricht, einen Eintrag in der Datenstruktur erzeugt, der den ersten Zustand, der der Nachricht zugeordnet ist, und die Ablaufzeit umfasst, die der Nachricht zugeordnet ist, und so agiert, dass er die Nachrichtenvariation inkrementiert.

13. Nachrichtenübermittlungsknoten nach Anspruch 10, ferner umfassend:
einen Direktzugriffsspeicher (RAM), der die Datenstruktur speichert;
ein Dateisystem, das eine Datei speichert;
wobei der Prozessor bestimmt, ob ein Zeitgeber abgelaufen ist oder nicht, der Zeitgeber für eine Zeit bezeichnend ist, zu der ein Inhalt der Datenstruktur an die Datei anzuhängen ist, und der Prozessor auf das Bestimmen hin, dass der Zeitgeber abgelaufen ist, den Inhalt der Datenstruktur an die Datei anhängt.

14. Nachrichtenübermittlungsknoten nach Anspruch 10, wobei der Prozessor so agiert, dass er der Nachricht einen zweiten Zustand zuordnet, und den Nachrichtenvariationseintrag in der Datenstruktur, der mit dem ersten Zustand und der Ablaufzeit assoziiert ist, dekrementiert.

15. Nachrichtenübermittlungsknoten nach Anspruch 13, wobei der Prozessor einen Nachrichtenvariationseintrag in der Datenstruktur, der mit dem zweiten Zustand und der Ablaufzeit assoziiert ist, inkrementiert.

16. Nachrichtenübermittlungsknoten nach Anspruch 12, wobei der Prozessor wenigstens bestimmte Einträge unter einer Mehrzahl von Einträgen liest, die in der Datei gespeichert sind, die bestimmten Einträge eine Ablaufzeit haben, die noch nicht abgelaufen ist, und der Prozessor Variationsinformation jedes Eintrags, der gelesen wird, hinzufügt, um eine Summe zu erhalten, die für eine Anzahl von Nachrichten eines Systems repräsentativ ist.

17. Nachrichtenübermittlungsknoten nach Anspruch 15, wobei der Prozessor wenigstens bestimmte Einträge unter einer Mehrzahl von Einträgen liest, die in der Datei gespeichert sind, wenn der Nachrichtenübermittlungsknoten neu gestartet wird.

## Revendications

1. Une mémoire pour sauvegarder de l'information de comptage de messages, comprenant une structure de données sauvegardée dans ladite mémoire, la structure de données incluant une pluralité d'entrées, chaque entrée correspondant à un état de message et comprenant:
une information d'état de message (110) définissant un état de message;
une information de variation (112) indicative d'un nombre de messages qui se sont joints et qui ont quitté l'état de message pendant une certaine période de temps; et
un temps d'expiration (114), représentatif d'un temps lorsque les messages qui se sont joints et qui ont quitté l'état de message doivent être écartés.

2. La mémoire selon la revendication 1, dans laquelle la mémoire est une Mémoire Vive (RAM) et la structure de données est un fichier, ou dans laquelle la mémoire est un système de fichiers et la structure de données est un fichier, ou
dans laquelle la mémoire est contenue dans un noeud de messagerie.

3. Une méthode pour gérer des messages dans un noeud de messagerie, la méthode comprenant les étapes de:
a. recevoir (212) un message;
b. assigner (214) un temps d'expiration au message, le temps d'expiration étant indicatif d'un temps lorsque le message est à être écartés du système;
c. assigner (216) un premier état au message; et
d. incrémenter (224) une entrée de variation de message dans une structure de données afin de refléter l'assignation du premier état au message, l'entrée de variation étant associée avec i) le premier état assigné au message et ii) avec le temps d'expiration assigné au message.

4. La méthode selon la revendication 3, comprenant en outre avant l'étape a., l'étape de:
e. réinitialiser la structure de données.

5. La méthode selon la revendication 3, comprenant en outre les étapes de:
e. après l'étape c., créer une clé comprenant le temps d'expiration assigné au message et le premier état assigné au message;
f. déterminer si une entrée existe ou non dans la structure de données qui correspond à la clé; et
g. exécuter l'étape d. sur la détermination qu'une entrée existe dans la structure de données qui correspond à la clé.

6. La méthode selon la revendication 3, comprenant en outre les étapes de:
e. déterminer si un minuteur est expiré ou non, le minuteur étant indicatif d'un temps lorsqu'un contenu de la structure de données doit être ajouté à un fichier; et
f. sur une détermination que le minuteur est expiré, ajouter le contenu de la structure de données au fichier.

7. La méthode selon la revendication 3, comprenant en outre les étapes de:
e. assigner un deuxième état au message; et
f. décrémenter l'entrée de variation de message dans la structure de données qui est associée avec le premier état et au temps d'expiration.

8. La méthode selon la revendication 7, comprenant en outre les étapes de:
g. incrémenter une entrée de variation de message dans la structure de données qui est associée avec le deuxième état et au temps d'expiration.

9. Une méthode pour compter des messages, la méthode comprenant les étapes de:
a. dans un noeud de messagerie, lire (412) au moins certaines entrées parmi une pluralité d'entrées sauvegardées dans un fichier, lesdites certaines entrées ayant un temps d'expiration qui n'est pas encore expiré; et
b. ajouter (414) de l'information de variation de chaque entrée qui est lue afin d'obtenir une somme représentative d'un nombre de messages d'un système;
où chaque entrée du fichier inclut: i) un état de message, ii) une information de variation indicative d'un nombre de messages qui se sont joints et qui ont quitté l'état de message pendant une certaine période de temps, iii) un temps d'expiration représentatif d'un temps lorsque les messages qui se sont joints et ont quitté l'état de message doivent être écartés.

10. Un noeud de messagerie, comprenant:
une interface d'entrée/sortie (140) recevant un message;
une structure de données (100) sauvegardant une pluralité d'entrées, chaque entrée comprenant une information d'état de message définissant un état de message, une variation de message indicative d'un nombre de messages qui se sont joints et ont quitté l'état de message pendant une certaine période de temps, et un temps d'expiration représentatif d'un temps lorsque les messages qui se sont joints et ont quitté l'état de message doivent être écartés;
un processeur de message (130) assignant un temps d'expiration au message reçu, le temps d'expiration étant indicatif d'un temps lorsque le message doit être écarté, le processeur de message assignant en outre un premier état au message reçu, et agissant pour incrémenter une variation de message dans la structure de données, la variation de message étant associée avec i) le premier état assigné au message et ii) avec le temps d'expiration assigné au message.

11. Le noeud de messagerie selon la revendication 10, dans lequel le processeur de message crée une clé comprenant le temps d'expiration assigné au message et le premier état assigné au message, détermine si une entrée existe ou non dans la structure de données qui correspond à la clé, et sur une détermination qu'une entrée existe dans la structure qui correspond à la clé, agit pour incrémenter la variation de message.

12. Le noeud de messagerie selon la revendication 10, dans lequel le processeur de message crée une clé comprenant le temps d'expiration assigné au message et le premier état assigné au message, détermine si une entrée existe ou non dans la structure de données qui correspond à la clé, et sur une détermination qu'une entrée n'existe pas dans la structure de données qui correspond à la clé, crée une entrée dans la structure de données qui comprend le premier état assigné au message et le temps d'expiration assigné au message et agit pour incrémenter la variation de message.

13. Le noeud de messagerie selon la revendication 10, comprenant en outre:
une Mémoire Vive (RAM) sauvegardant la structure de données;
un système de fichiers sauvegardant un fichier;
dans lequel le processeur détermine si un temporisateur est expiré ou non, le temporisateur étant indicatif d'un temps lorsqu'un contenu de la structure de données doit être ajouté au fichier, le processeur, sur une détermination que le temporisateur est expiré, ajoutant le contenu de la structure de données au fichier.

14. Le noeud de messagerie selon la revendication 10, dans lequel le processeur agit pour assigner un deuxième état au message, et pour décrémenter l'entrée de variation de message dans la structure de données qui est associée avec le premier état et au temps d'expiration.

15. Le noeud de messagerie selon la revendication 13, dans lequel le processeur incrémente une entrée de variation de message dans la structure de données qui est associée avec le deuxième état et au temps d'expiration.

16. Le noeud de messagerie selon la revendication 12, dans lequel le processeur lit au moins certaines entrées parmi une pluralité d'entrées sauvegardées dans le fichier, lesdites certaines entrées ayant un temps d'expiration qui n'est pas encore expiré, le processeur ajoutant de l'information de variation de chaque entrée qui est lue pour obtenir une somme représentative d'un nombre de messages d'un système.

17. Le noeud de messagerie selon la revendication 15, dans lequel le processeur lit au moins certaines entrées parmi une pluralité d'entrées sauvegardées dans le fichier lorsque le noeud de messagerie est repris.
